# EUROPEAN PATENT APPLICATION

(11) **EP 3 157 262 A1**
(43) Date of publication of application: **19.04.2017**
(21) Application number: 15806533.4
(22) Date of filing: 11.06.2015
(51) Int. Cl.: H04N 21/436, H04N 21/242, H04N 21/254

(54) **DEVICE AND METHOD FOR TRANSMITTING AND RECEIVING DATA**

(30) Priority: 12.06.2014 US 201462011050 P
(71) Applicant: LG Electronics Inc., Yeongdeungpo-gu Seoul 152-721 (KR)
(72) Inventor: LIM, Jinkwon, Seoul 137-893 (KR); PARK, Jangwoong, Seoul 137-893 (KR); KIM, Dokyun, Seoul 137-893 (KR); LEE, Hyeonjae, Seoul 137-893 (KR); YANG, Hyunsik, Seoul 137-893 (KR)
(74) Representative: Frenkel, Matthias Alexander
(86) International application number: PCT/KR2015/005875
(87) International publication number: WO 2015/190841

(57) **Abstract**

According to an aspect of the present invention, a method for transmitting and receiving data performed by a source device may include transmitting a readout request for Extended Display Identification Data (EDID) information to a sink device; receiving the EDID information from the sink device; and determining a video timing block based on the EDID information, where the EDID information may include: a Base EDID block including basic resolution information; and a Display Identification Data (DisplayID) structure including at least one of the video timing block including high resolution information and priority information of at least one of the video timing block.

## Description

### [Technical Field]

The present invention relates to a method and apparatus for transmitting and receiving data using a display interface, and more particularly, to a method and apparatus for transmitting and receiving data for supporting the image quality of 4K and 8K which is the resolution of UHD class by transmitting high resolution information of a sink device through a display interface.

### [Background Art]

A display interface means the interface for transmitting an image to a display apparatus such as a monitor or a TV. Representatively, there are the Digital Visual Interface (DVI), the High Definition Multimedia Interface (HDMI), the DisplayPort, and so on as the display interface.

Particularly, the DisplayPort is the display interface standard that is established by VESA. The DisplayPort forwards a digital image signal, and also outputs a digital sound with a single cable. The DisplayPort may output the digital sound as well as the image with a single cable, and characterized by the small cable size.

The DisplayPort defines the unidirectional Main Link for transmitting audio/video data stream and the half-duplex bidirectional auxiliary channel (AUX CH) for the plug-and-play operation.

### [Disclosure]

### [Technical Problem]

According to the conventional art, when uncompressed video data is transmitted from a source device to a sink device through the DisplayPort, a case is occurred that the resolution of UHD class (e.g., image quality of 4K and 8K) is not provided in the sink device occurs.

This is because the order of priority is not designated between the Base EDID block included in the EDID information which is transmitted from the sink device to the source device and the DisplayID extension block. In more particular, since the Base EDID block is in short of bit number to show the resolution information of UHD class which is available to be supported by the sink device, the insufficient bit number of the Base EDID block is complemented by adding the high resolution information to the DisplayID extension block.

However, as described above, since the order of priority is not designated between the Base EDID block and the DisplayID extension block, the case occurs that the source device transmits the video data generated based on the resolution information included in the Base EDID block to the sink device. Consequently, the problem occurs that the sink device provides the resolution of lower quality although the sink device is available to support the resolution of UHD class.

### [Technical Solution]

According to an aspect of the present invention, a method for transmitting and receiving data performed by a source device may include transmitting a readout request for Extended Display Identification Data (EDID) information to a sink device; receiving the EDID information from the sink device; and determining a video timing block based on the EDID information, where the EDID information may include: a Base EDID block including basic resolution information; and a Display Identification Data (DisplayID) structure including at least one of the video timing block including high resolution information and priority information of at least one of the video timing block.

The priority information may represent: at least one of the video timing block which is supportable by the sink device, or a priority of a plurality of video timing block.

When the priority information represents a video timing block which is supportable by the sink device, determining the video timing block may include selecting the video timing block which is supportable by the sink device.

When the priority information represents a plurality of video timing blocks which is supportable by the sink device, determining the video timing block may include selecting the video timing block based on a type value of the plurality of video timing blocks.

When the priority information represents a priority of the plurality of video timing blocks, the method may further include sequentially matching recommended resolution information of the video data to the priority of the plurality of video timing blocks according to the priority information.

Determining the video timing block may include selecting a video timing block which is matched to the recommended resolution information of the video data among the priority of the plurality of video timing blocks as a result of matching.

The method for transmitting and receiving data may further include transmitting the video data based on the determined video timing block to the sink device.

The source device according to an embodiment of the present invention may include a transmitter configured to transmitting and receiving data; and a control unit configured to control the transmitter, wherein the source device is configured to perform: transmitting a readout request for Extended Display Identification Data (EDID) information to a sink device; receiving the EDID information from the sink device; and determining a video timing block based on the EDID information, where the EDID information may include: a Base EDID block including basic resolution information; and a Display Identification Data (DisplayID) structure including at least one of the video timing block including high resolution information and priority information of at least one of the video timing block.

The priority information may represent: at least one of the video timing block which is supportable by the sink device, or a priority of a plurality of video timing block.

When the priority information represents a video timing block which is supportable by the sink device, the source device may select the video timing block which is supportable by the sink device.

When the priority information represents a plurality of video timing blocks which is supportable by the sink device, the source device selects the video timing block based on a type value of the plurality of video timing blocks.

When the priority information represents a priority of the plurality of video timing blocks, the source device sequentially may match recommended resolution information of the video data to the priority of the plurality of video timing blocks according to the priority information.

The source device may select a video timing block which is matched to the recommended resolution information of the video data among the priority of the plurality of video timing blocks as a result of matching.

The source device transmits the video data based on the determined video timing block to the sink device.

The method for transmitting and receiving data performed by a sink device may include receiving a readout request for Extended Display Identification Data (EDID) information from a source device; and transmitting the EDID information from the source device; where the EDID information may include: a Base EDID block including basic resolution information; and a Display Identification Data (DisplayID) structure including at least one of the video timing block including high resolution information and priority information of at least one of the video timing block.

The priority information may represent: at least one of the video timing block which is supportable by the sink device, or a priority of a plurality of video timing block.

The method for transmitting and receiving data of the sink device may further include receiving video data based on a video timing block which is determined based on the EDID information from the source device.

The sink device according to an embodiment of the present invention may include a transmitter configured to transmitting and receiving data; and a control unit configured to control the transmitter, wherein the source device is configured to perform: receiving a readout request for Extended Display Identification Data (EDID) information from a source device; and transmitting the EDID information from the source device; where the EDID information includes: a Base EDID block including basic resolution information; and a Display Identification Data (DisplayID) structure including at least one of the video timing block including high resolution information and priority information of at least one of the video timing block.

The priority information may represent: at least one of the video timing block which is supportable by the sink device, or a priority of a plurality of video timing block.

The sink device may receive video data based on a video timing block which is determined based on the EDID information from the source device.

### [Technical Effects]

According to an embodiment of the present invention, a source device may know the information of the optimal resolution that a sink device is able to provide, and accordingly, the source device may transmit the video data generated based on the optimal resolution of the sink device. Therefore, the sink device may appropriately provide the contents of the resolution in accordance with the specification to a user.

In addition, according to another embodiment of the present invention, a source device may select a resolution that is matched to the display characteristics of the video data among the resolution that a sink device is able to provide, and accordingly, there is an effect that the sink device may provide the contents with an optimal resolution for a user.

### [Description of Drawings]

The accompanying drawings, which are included herein as a part of the description for help understanding the present invention, provide embodiments of the present invention, and describe the technical features of the present invention with the description below.
FIG. 1 is a block diagram illustrating a DisplayPort system according to an embodiment of the present invention.
FIG. 2 is a table illustrating the resolution supported in the DisplayPort system.
FIG. 3 is a diagram illustrating an EDID structure according to an embodiment of the present invention.
FIGS. 4 and 5 are EDID Extension blocks according to an embodiment of the present invention.
FIG. 6 shows the Display Identification Data (DisplayID) according to an embodiment of the present invention.
FIG. 7 is a flowchart illustrating a method for transmitting and receiving data of a DisplayPort system.
FIG. 8 is a flowchart of a DisplayPort system according to an embodiment of the present invention.
FIG. 9 is a flowchart illustrating FIG. 8 in the aspect of the source device and the sink device.
FIG. 10 is a flowchart illustrating the operation of a DisplayPort system according to an embodiment of the priority information.
FIG. 11 is a diagram illustrating the video timing block according to a first embodiment.
FIG. 12 is a diagram illustrating the video timing block according to a second embodiment.
FIG. 13 is a flowchart of the operation of a DisplayPort system according to an embodiment of the priority information.
FIG. 14 is a flowchart illustrating FIG. 13 in the aspect of the source device and the sink device.
FIG. 15 is a diagram illustrating the video timing blocks according to a third embodiment.

### [Best Mode for Invention]

Although the terms used in the present specification are selected as general terms which are currently used widely as possible while considering functions in the present specification, the terms may be changed according to intentions of those skilled in the art, practices and advents of new techniques. In addition, in a special case, a term is discretionally selected by the applicant. In this case, the meaning of the term will be described in the corresponding embodiment of the detailed description. Accordingly, the terms used in the present specification should be interpreted based on the substantive meanings of the terms and based on the description throughout the present specification, not based on simple nominal terms.

Further, the embodiments will be described in detail by reference to the accompanying drawings and the contents shown in the accompanying drawings, but the present invention is not restricted or limited to the embodiments.

Hereinafter, the preferred embodiment of the present invention will be described in more detail by reference to the accompanying drawings.

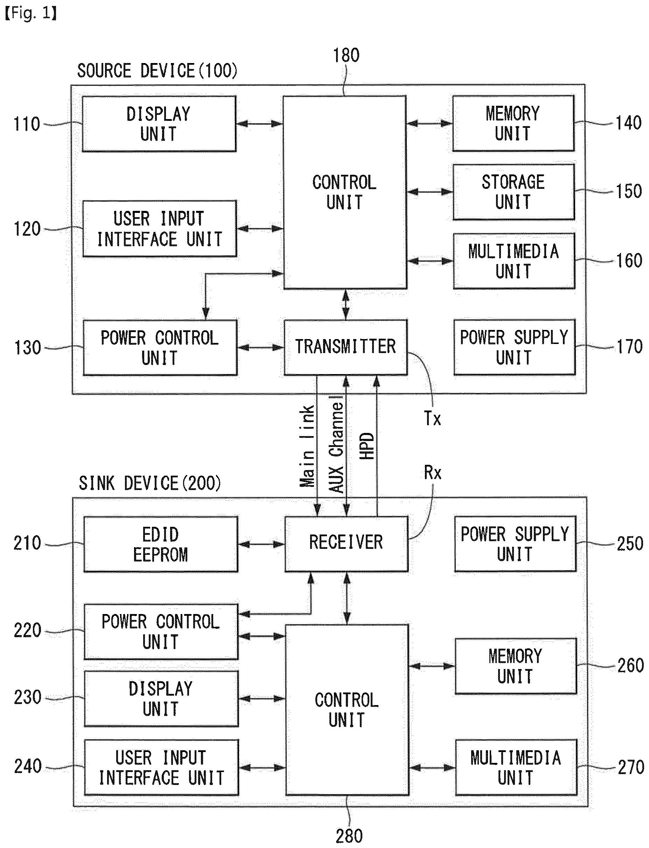

FIG. 1 is a block diagram illustrating a DisplayPort system according to an embodiment of the present invention. Hereinafter, the devices that transmit and receive video/audio/control data using the DisplayPort will be collectively referred to the DisplayPort system.

Referring to FIG. 1, the DisplayPort system may include a source device 100 and a sink device 200. Particularly, in the DisplayPort system, a device that transmits video/audio data through the DisplayPort may correspond to the source device 100, and a device that receives video/audio data through the DisplayPort may correspond to the sink device 200. In this case, as physical devices for supporting data transmission and reception by connecting two devices, DisplayPort cables and connectors may be provided.

The DisplayPort cables and the connectors may perform pairing between a Main link and an Auxiliary (AUX) Channel. The Main link and the AUX channel may be used for transmitting video data, audio data and auxiliary data.

The Main link is the channel of unidirectional, high-bandwidth and low-latency. The Main link may be used proper to the transmission of isochronous data streams.

The AUX channel is the channel of half-duplex and bidirectional. The AUX channel may be used for controlling the connection between devices and controlling the device. In order to perform the communication through the AUX channel, a source device 100 may be a master device that activates or initiates the AUX channel, and a sink device 200 may be slave device that responds to the activated AUX channel.

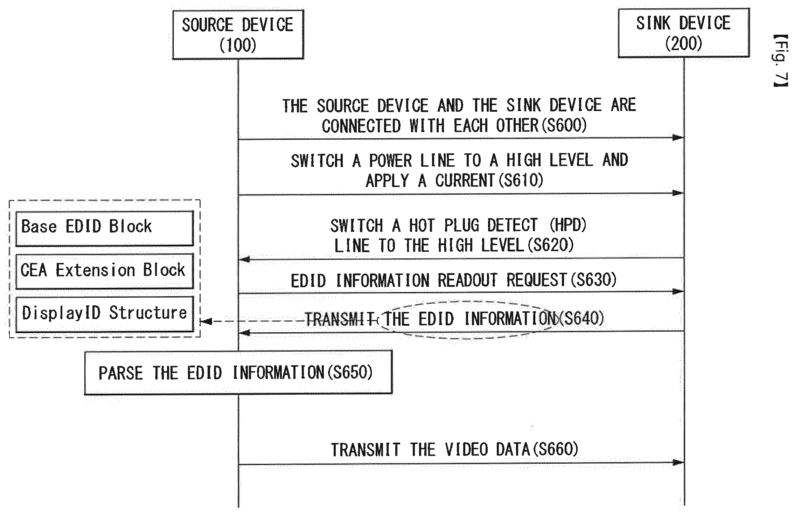

The source device 100 may receive the Extended Display Identification Data (EDID) information from the sink device 200. The source device 100 may detect configuration information, support function, and the like of the sink device 200 by parsing the received EDID information. The EDID information may include at least one block that includes various information on the sink device 200, which will be described below in detail in relation to FIG. 7.

The source device 100 may include at least one of a display unit 110, a user input interface unit 120, a control unit 180, a transmitter Tx, a memory unit 140, a storage unit 150, a multimedia unit, a power control unit 130 and a power supply unit 170.

The sink device 200 may include at least one of an EDID EEPROM 210, a power control unit 220, a display unit 230, a user input interface unit 240, a receiver Rx, a control unit 280, a power supply unit 250, a memory unit 260 and a multimedia unit 270. Hereinafter, description for units that perform the same operation will not be repeated.

The source device 100 represents a physical device for transmitting contents stored in the storage unit 150 to the sink device 200 or streaming the contents. The source device 100 may send a request message to the sink device 200 or receive a request message received from the sink device 200. The source device 100 may provide a UI for processing a response message that the sink device 200 transmits and delivering to a user, and this UI may be provided as a display in case that the source device 100 includes the display unit 110. In addition, the source device 100 may request a power to be supplied to the sink device 200.

The sink device 200 may receive contents from the source device 100, and may transmit a response message by transmitting a request message to the source device 100 or processing the message received from the source device 100. The sink device 200 may also process a response message received from the source device 100, and provide a User Interface (UI) which is delivered to a user. In case that the sink device 200 includes a display unit, the sink device 200 may provide the UI to a display.

The user input interface unit 120 or 240 may receive an action or an input of a user. As an embodiment, the user input interface unit 120 or 240 may correspond to a remote controller, a voice receiving/detecting device, a touch input sensing/receiving device, and so on.

The control unit 180 or 280 may control general operations of each device. Particularly, the control unit 180 or 280 may perform a communication between the units included in the respective devices, and may control the operation of each of the devices.

The memory unit 140 or 260 refers to as volatile physical devices that may store various types of data.

The storage unit 150 refers to as nonvolatile physical devices that may store various types of data.

The EDID EEPROM 210 refers to an EEPROM that stores EDID information.

All of the memory unit 140 or 260, the storage unit 150 and the EDID EEPROM 210 may play the role of storing data, and all of these may be collectively called the memory unit.

The display unit 110 or 230 may display data or contents received through the DisplayPort, data and UI stored in the memory unit, and the like by control of the control unit 180 or 280.

The multimedia unit 160 or 270 may play various sorts of multimedia. The multimedia unit 160 or 270 may be implemented separately with the control unit 180 or 280, or implemented as an integral physical component with the control unit 180 or 280.

The power supply unit 170 or 250 may supply power required to operate the source device 100, the sink device 200 and units included in these.

The transmitter Tx is a unit for transmitting and receiving data through the DisplayPort by being included in the source device 100, an may perform transmission and reception of data that includes commands, requests, actions, responses between devices as well as audio/video data.

The receiver Rx is a unit for transmitting and receiving data through the DisplayPort by being included in the sink device 200, an may perform transmission and reception of data that includes commands, requests, actions, responses between devices as well as audio/video data.

The power control unit 130 or 220 may manage and control power transmission and reception between devices through the transmitter and the receiver.

The units except the transmitter Tx, the receiver Rx and the control unit 180 or 280 among the units described above may be included in the source device 100 or the sink device 200, selectively according to an embodiment, and may not correspond to essential component units.

Meanwhile, although it is not shown in the drawing, the description of each of the blocks described above may be similarly applied to the HDMI system. Here, the HDMI system is collectively referred to the devices that transmit and receive video/audio/control data using the HDMI. The HDMI system may include the source device 100, the sink device 200 and an HDMI cable.

In the HDMI system, the device that transmits video/audio data through the HDMI may correspond to the source device 100, and the device that receives video/audio data through the HDMI may correspond to the sink device 200. And, the HDMI cables may be provided for supporting data transmission and reception by connecting two devices.

The HDMI cables and the connectors may perform pairing of four channels that provides a Transition Minimized Differential Signaling (TMDS) data channel and a TMDS clock channel. The TMDS data channels may be used for forwarding video data, audio data and auxiliary data. The HDMI system provides a Video Electronics Standards Association (VESA) Display Data Channel (DDC). The DDC is used for a configuration between a source device and a sink device and a status information exchange.

The source device 100 and the sink device 200 of the HDMI system may include the same units as the source device 100 and the sink device 200 of the DisplayPort system, and the description for the units is the same as above.

Hereinafter, various embodiments of a method for transmitting and receiving data based on the DisplayPort system will be described. However, it is understood that the following embodiments may also be identically or similarly applied to the HDMI system.

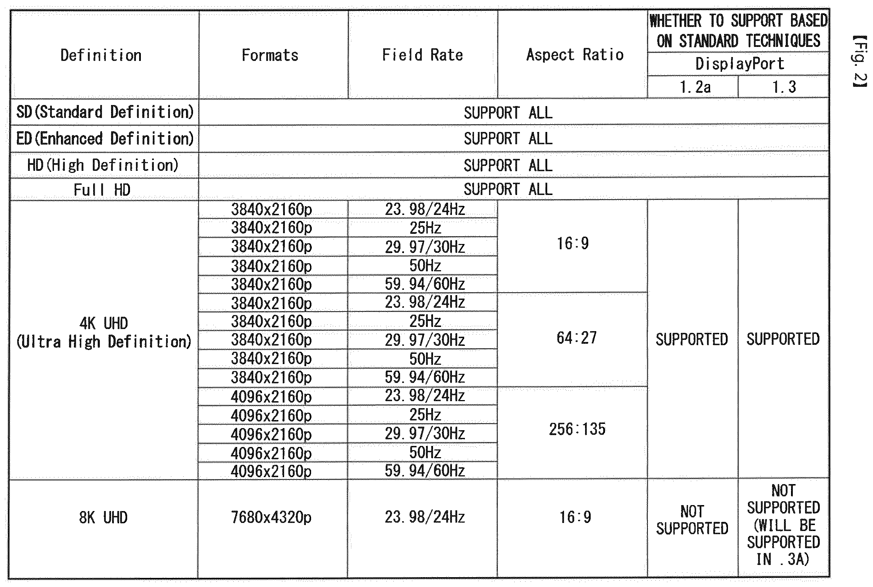

FIG. 2 is a table illustrating the resolution supported in the DisplayPort system.

Referring to FIG. 2, the DisplayPort system may support the resolutions. As shown in FIG. 2, the mandatory resolution is not designated in the DisplayPort system. Accordingly, in the DisplayPort system, the resolution of contents displayed by the sink device 200 may be changed according to the basic resolution information included in the EDID information and the parsing order or the method of the EDID information. Consequently, the problem of providing contents of low resolution may occur although the sink device 200 may support high resolution. The description for the problem will be described below in relation to FIG. 7.

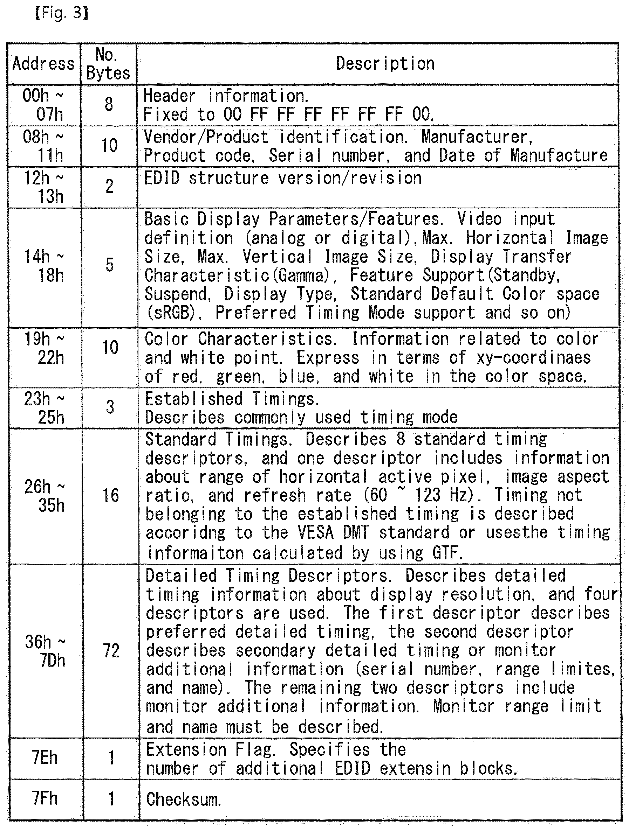

FIG. 3 is a diagram illustrating an EDID structure according to an embodiment of the present invention.

Referring to FIG. 3, the EDID structure briefly shows the information included in each address.

The EDID structure is the data structure in which various types of information for the display apparatus defined in VESA are included, and may be transmitted from the sink device 200 to the source device 100, and may be read by the source device 100. In the EDID structure, the data structure of version 1.3 has been used in an IT display apparatus, a CE display apparatus and video interfaces (DisplayPort, HDMI, etc.).

The EDID structure includes a Base EDID block, and the Base EDID block also includes various types of information in relation to the sink device 200. Particularly, in relation to the present invention, the Base EDID block includes the basic resolution information that the sink device 200 is able to support. However, since the Base EDID block is in short of bit number to include the high resolution information of UHD class such as 4K and 8K, the Base EDID block includes the basic resolution information of lower resolution (e.g., HD class, Full HD class, etc.) than the high resolution. The source device 100 may determine the resolution of the video data that is going to be transmitted to the sink device 200 based on the basic resolution information of the Base EDID block.

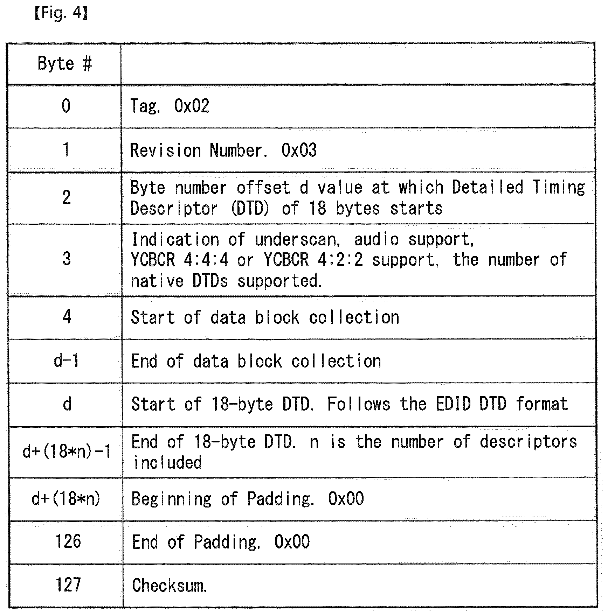

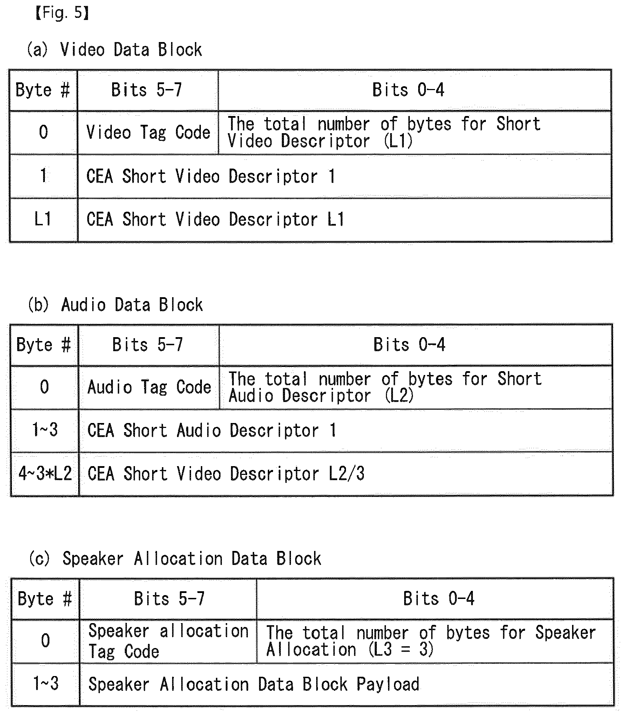

FIGS. 4 and 5 are EDID Extension blocks according to an embodiment of the present invention. More particularly, FIG. 4 shows the EDID Extension block and FIG. 5A shows the video data block. FIG. 5B shows the audio data block and FIG. 5C shows the speaker allocation data block.

The timing information described in the Base EDID block is designed for the IT display apparatus, and the EDID 1.3 Extension block defined in Video Electronics Standards Association (VESA) may separately used in order to show the timing information of the CE display apparatus. The CEA Extension block of version 3 is defined in CEA-861 B standard, and specifies four optional data blocks (video, audio, speaker allocation and vendor specific).

In the video data block shown in FIG. 5A, the Short Video Descriptor shows the Video Identification Code defined in CEA-861. In the audio data block in FIG. 5B, the Short Audio Descriptor shows the Audio Format Code defined in CEA-861. The Speaker Allocation Data Block Descriptor shown in FIG. 5C shows the Data Block Payload defined in CEA-861.

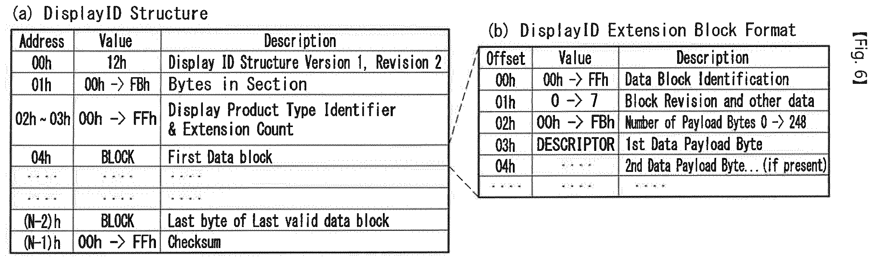

FIG. 6 shows the Display Identification Data (DisplayID) according to an embodiment of the present invention. More particularly, FIG. 6A shows the DisplayID structure and FIG. 6B shows the data block format of the DisplayID Extension block included in the DisplayID structure.

The DisplayID is a VESA standard for replacing E-EDID standard and E-EDID version 1.4. Version 1.1 of the DisplayID is published on March of 2009, and version 1.3 is published on September of 2013. The DisplayID is characterized by having various structures including the existing EDID Extension format as well as new Extension formats for the embedded display and the 3D display.

Referring to FIG. 6A, the DisplayID structure includes various data blocks related to the display of contents such as a video interface, a display device technique, timing detail and manufacturer information.

Referring to FIG. 6B, the DisplayID Extension block may include various fields. The length of each field included in the DisplayID Extension block is changeable, and particular bit number is not designated. However, the length of a specific field may be fixed.

The description for each field is as follows.
- Data Block Identification field : Show the tag of each data block
- Block Revision and other data: Revision increases as a bit is included or changed in each block.
- Number of Payload bytes 0→248: Represent by bit number how much Payload is used in a single data block
- 1∼Nth Data Payload Byte: Represent the role of each data Payload byte from offset 03h to Nh

The DisplayID Extension block may be used as the "Video Timing Modes Data Block; hereinafter, referred to as 'video timing block') that includes the video timing mode information which is supported by the sink device 200. In this case, the video timing block may include the resolution information, the timing information, and so on which are required for playing the contents of the sink device 200. Particularly, the video timing block according to an embodiment of the present invention may include the high resolution information which is not included in the Base EDID block, for example, the information of 4K and 8K resolution of UHD class.

There are six types of the video timing block, and the source device 100 may transmit the video data based on a type of the video timing block among the six types to the sink device 200. For this process, at least one type of the video timing block among the six types may include the priority information of the video timing block. Here, the priority information of the video timing block may be the information that represents the priority of at least one video timing block or a plurality of timing blocks that the sink device 200 is able to support.

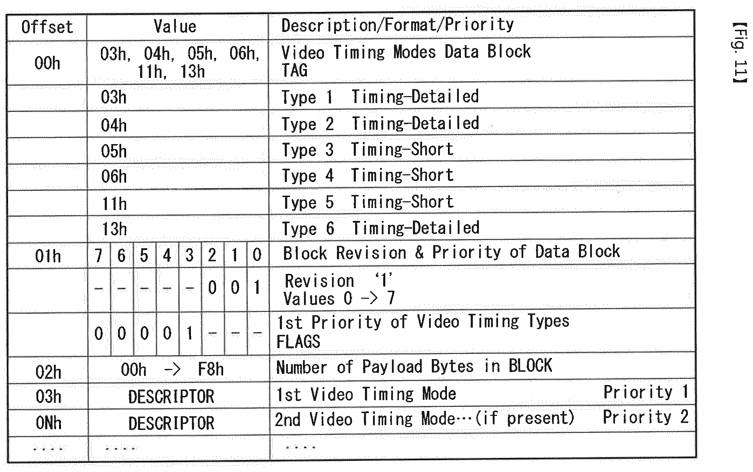

The source device 100 may determine a type of the video timing block based on the priority information, and transmit the video data based on the determined video timing block to the sink device 200. Since the video timing block is included in the DisplayID structure, in the present invention, it may be expressed that the priority information of the video timing block is included in the DisplayID structure. The embodiment of the video timing block will be described in more detail below in relation to FIG. 11.

FIG. 7 is a flowchart illustrating a method for transmitting and receiving data of a DisplayPort system.

Referring to FIG. 7, firstly, the source device 100 and the sink device 200 may be connected with each other (step, S600). In this case, the source device 100 and the sink device 200 may be connected via the DisplayPort cable, but not limited thereto, and may be connected via the HDMI cable.

Next, the source device 100 may switch a power line to a high level, and may apply a current (step, S610). For example, the source device 100 may switch the 5V power line from the low level to the high level, and apply the current. Through the process, the source device 100 may operate the EEPROM in which the EDID information is stored and the related circuitry as well.

Subsequently, the sink device 200 may switch a Hot Plug Detect (HPD) line from the low level to the high level (step, S620). In this case, the sink device 200 may notify the fact that the DisplayPort cable is normally connected, and that the EDID related circuitry is activated so that the access to the EDID information is available to the source device 100.

Next, the source device 100 may transmit an EDID information readout request to the sink device 200 (step, S630).

Subsequently, in response to the EDID information readout request, the sink device 200 may transmit the EDID information stored in the EDID EEPROM to the source device 100 (step, S640). The EDID information may include the Base EDID block, the CEA Extension block and the DisplayID structure. The description for the element is as described above in relation to FIG. 3 to FIG. 6.

Next, the source device 100 may parse the EDID information (step, S650). In this case, although it is not shown in the flowchart, the source device 100 may determine the resolution of the video data that is going to be transmitted to the sink device 200 based on the Base EDID block and/or the DisplayID structure included in the EDID information.

Conventionally, when determining the resolution of the video data, since the priority is not designated between the Base EDID block and the video timing block included in the DisplayID structure, the source device 100 determines the resolution of the video data based on the basic resolution information included in the Base EDID block. Consequently, the problem of providing contents of low resolutions may occur although the sink device 200 may support high resolutions.

Accordingly, in the present invention, the video timing block in the DisplayID structure may be configured to have the priority than the Base EDID block. Consequently, the source device 100 determines the resolution of the video data by preferentially considering the high resolution information included in the video timing block, and accordingly, the sink device 200 may provide the contents of high resolution appropriately. The description will be described in more detail below by reference to FIG. 7 to FIG. 15.

Lastly, the source device 100 may transmit the video data to the sink device 200 based on the received EDID information (step, S660). Particularly, the source device 100 may transmit the video data to the sink device 200 based on the resolution which is determined based on the EDID information.

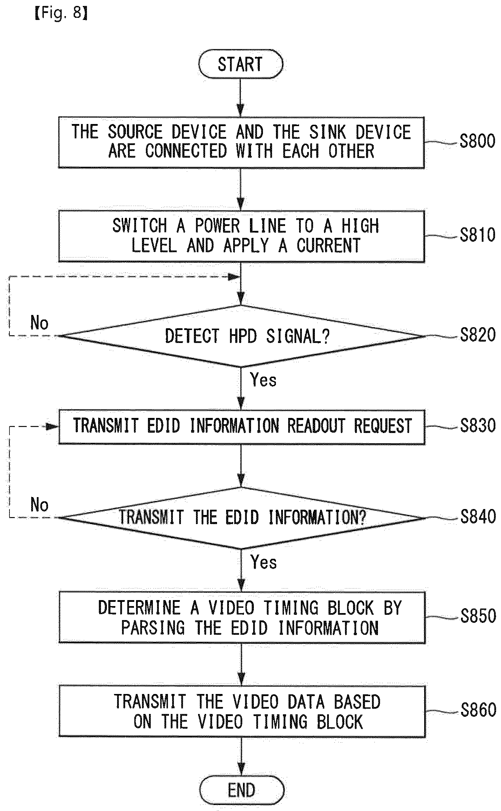

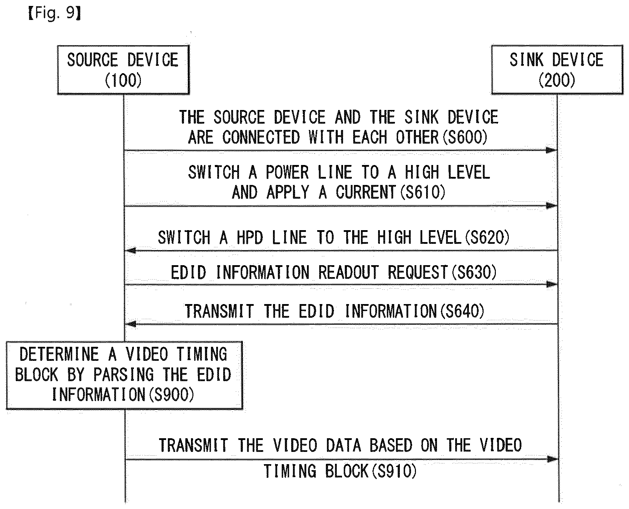

FIG. 8 is a flowchart of a DisplayPort system according to an embodiment of the present invention. FIG. 9 is a flowchart illustrating FIG. 8 in the aspect of the source device 100 and the sink device 200.

The description above in relation to FIG. 7 may be identically applied to the flowchart. Particularly, steps S800 to S840 shown in FIG. 8 correspond to steps S600 to S640 of the flowchart shown in FIG. 7. And, since the description for steps S600 to S640 shown in FIG. 9 are disclosed in FIG. 7, the description for the steps will be omitted.

Referring to FIG. 8 and FIG. 9, the source device 100 that receives the EDID information in the DisplayPort system may determine a video timing block by parsing the received EDID information (steps, S850 and 900). More particularly, the source device 100 that receives the EDID information from the sink device 200 may determine a single video timing block in order to determine the resolution of the video data by parsing the EDID information.

When parsing the EDID information, the source device 100 may read the Base EDID block, the CEA Extension block and the DisplayID structure included in the EDID information. In the case that the priority information of the video timing block is included in the DisplayID structure, when determining the resolution of the video data, the source device 100 may select a single video timing block among the video timing blocks of six types based on the priority information. As a result, the source device 100 may determine the resolution of the video data by preferentially considering the high resolution information included in the selected video timing block in comparison with the basic resolution information of the Base EDID block.

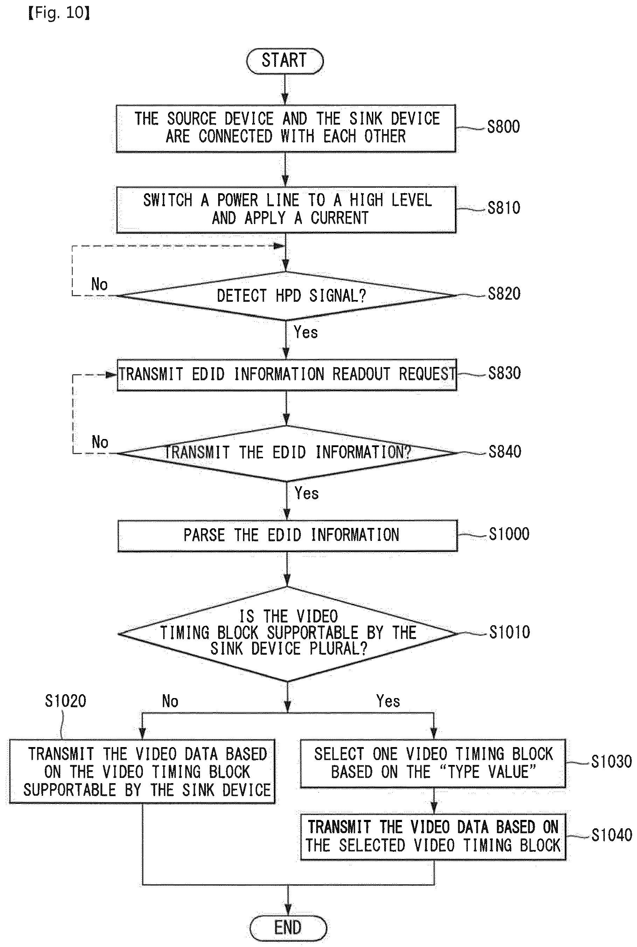

The source device 100 determines the video timing block according to the shape of the priority information as various embodiments, and the description for this will be described below by reference to FIGS. 10 to 16.

Lastly, the source device 100 may transmit the video data based on the determined video timing block (steps, S860 and S910). More particularly, the source device 100 may transmit the video data based on the high resolution information included in the determined video timing block in the previous step to the sink device 200.

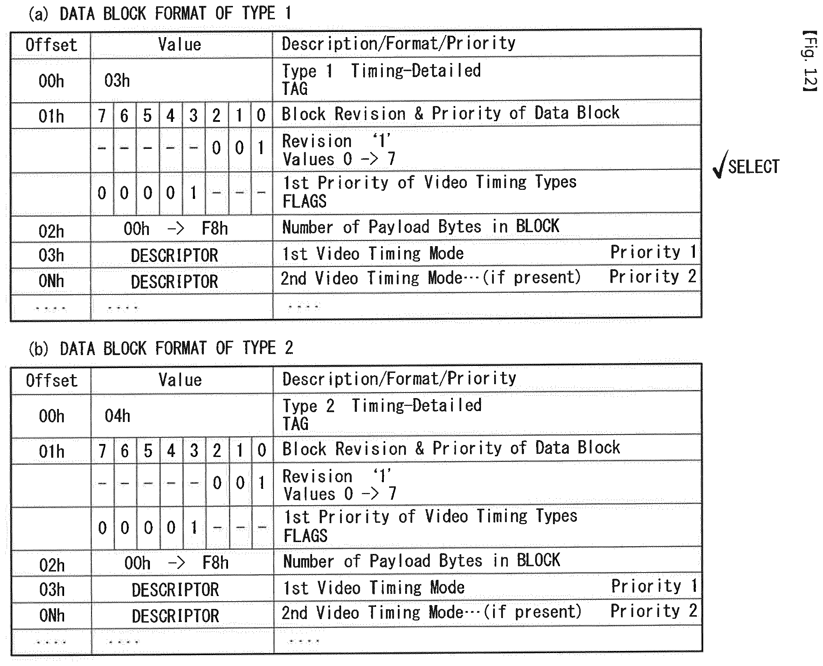

FIG. 10 is a flowchart illustrating the operation of a DisplayPort system according to an embodiment of the priority information. FIG. 11 is a diagram illustrating the video timing block according to a first embodiment. FIG. 12 is a diagram illustrating the video timing block according to a second embodiment. The description for steps S800 to S840 shown in FIG. 10 is the same as the description in relation to FIG. 8.

Referring to FIG. 10, in the DisplayPort system, the source device 100 may parse the EDID information (step, S1000). The source device 100 may acquire various types of information in relation to the sink device 200 by parsing the EDID information.

Next, in the DisplayPort system, the source device 100 may determine whether the video timing block which is supportable by the sink device 200 is plural using the priority information of the video timing block included in the DisplayID structure among the EDID information (step, S1010).

In each video timing block, the priority information representing that the respective block is supportable by the sink device 200 may be included. In this case, the priority information may be included in each video timing block as a flag or a bit. In the case that the respective block is supportable by the sink device 200, the priority information value may be set as bit value '1' as the flag. On the contrary, in the case that the respective block is not supportable by the sink device 200, the priority information value may be set as bit value '0' as the flag.

More particularly, referring to FIG. 11, 00h offset of the video timing block may represent a type of the corresponding video timing block. The video timing blocks may be divided into six types, and may be distinguished by six type values 03h, 04h, 05h, 06h, 11 h and 13h.

The priority information of the video timing block may be included in 01h offset. Particularly, the value change information (hereinafter, referred to as 'Revision information') of bits of the video timing block may be allocated to bits 0 to 2 in 01h offset, and the priority information of the video timing block may be allocated to bits 3 to 7. In particular, bit 3 may be allocated as the flag for the priority information of the video timing block.

Each of the Revision information and the priority information may be set to '1' for the video timing block which is supportable by the sink device 200. More particularly, each of bit 0 and bit 3 may be set to '1' in 0h offset of the corresponding video timing block. In this case, the source device 100 may determine the resolution of the video data by referring to offset 03h to 0Nh of the corresponding video timing block.

Each of offset 03h to 0Nh includes the information of video timing mode, respectively, and the high resolution information which is supportable by the sink device 200 may be included in each video timing mode. In the case that a plurality of video timing modes is defined in the video timing block, the priority may be set among the plurality of video timing modes.

Referring to the description above, in the case that the video timing block which is supportable by the sink device 200 is plural, the value of the Revision information and the priority information of the corresponding video timing block may be set to '1', respectively. In more particular, referring to FIG. 12, when the sink device 200 may support the video timing block of the first and second types, both of the Revision information and the priority information of the first and second type video timing blocks may be set to '1'. On the other hand, both of the Revision information and the priority information of the video timing blocks that are not supportable by the sink device 200 may be set to '0'.

Referring to FIG. 10 again, in the case that there is one video timing block that is supportable by the sink device 200, the source device 100 may transmit the video data based on the video timing block (step, S1020). In more particular, the source device 100 may select the video timing block that may be supported by the sink device 200 according to the priority information of the video timing block, and may transmit the video data based on the high resolution information included in the selected video timing block to the sink device 200.

In the case that there is a plurality of video timing block that is supportable by the sink device 200, the source device 100 may select a single video timing block among the video timing blocks that may be supported by the sink device 200 (step, S1030). In this case, the source device 100 may select one video timing block based on the "type value" of the video timing block.

For example, the source device 100 may recognize that the priority is higher as the type value is lower. Accordingly, the source device 100 may select the video timing block of the lowest type value among the video timing blocks that are supportable by the sink device 200. As shown in FIG. 12, in the case that the sink device 200 supports the video timing blocks of the first and second types, the source device 100 may select the video timing block of the first type of which type value is the low.

Lastly, the source device 100 may transmit the video data based on the selected video timing block to the sink device 200 (step, S1040).

So far, the embodiment of the case is described that the priority information represents at least one video timing block that is supportable by the sink device 200. Hereinafter, the embodiment of the case will be described below that the priority information represents a plurality video timing blocks that is supportable by the sink device 200.

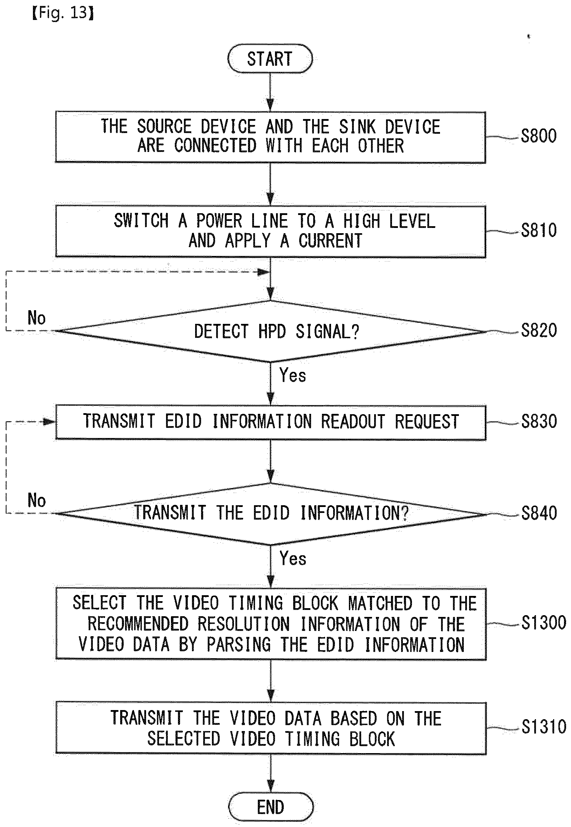

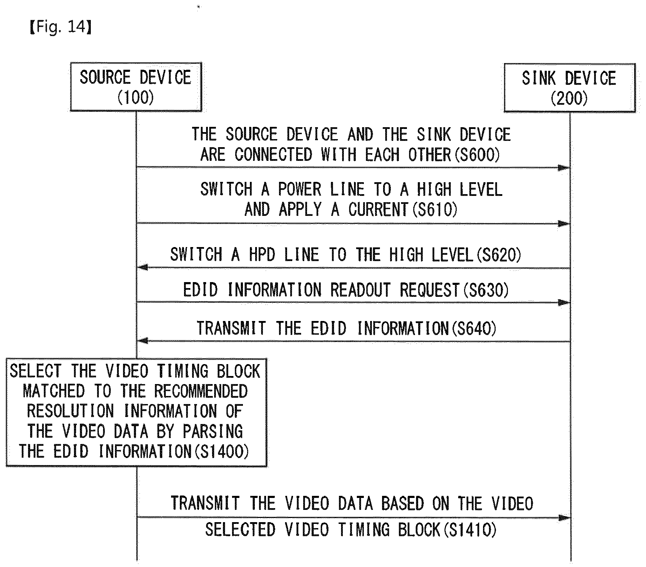

FIG. 13 is flowchart of the operation of a DisplayPort system according to an embodiment of the priority information. FIG. 14 is a flowchart illustrating FIG. 13 in the aspect of the source device and the sink device.

In relation to FIG. 13, since steps S800 to S840 are described by reference to FIG. 13, the overlapped description will be omitted. In relation to FIG. 14, since steps S600 to S640 are described by reference to FIG. 7, the overlapped description will be omitted.

Referring to FIGS. 13 and 14, in the DisplayPort system, the source device 100 may select the video timing block that is matched to the recommended resolution information of the video data by parsing the EDID information (steps, S1300 and S1400).

In the embodiment, the priority information may represent the priority for a plurality of video timing blocks. In the embodiments of FIGS. 10 to 12, the priority information represent a plurality of video timing blocks that may be supported by the sink device 200 only, but the information related to the priority among a plurality of video timing blocks is not provided.

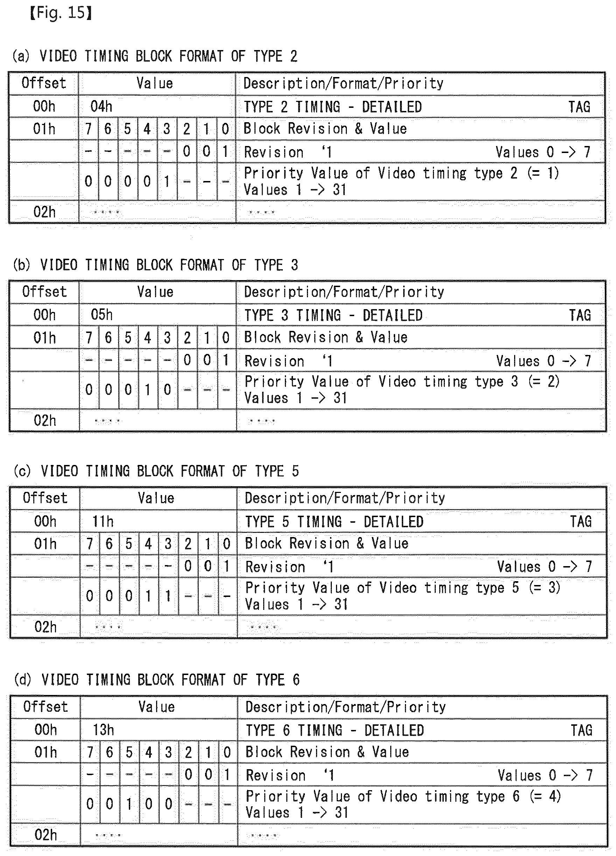

On the other hand, in the embodiment, the priority information may provide the information of the priority among a plurality of video timing blocks that may be supported by the sink device 200. The priority information may be included in each video timing block as values of bits, and the detailed description will be follows by reference to FIG. 15.

Accordingly, by sequentially matching the recommended resolution information of the video data and the video timing blocks according to the priority information, the source device 100 may select a single video timing block which is matched to. Here, the recommended resolution information of the video data may represent the optimal resolution and/or the highest resolution required to playback the video data.

The source device 100 may sequentially match the recommended resolution information of the video data and the high resolution information included in each of the video timing blocks according to the priority information of the video timing blocks, and may select a single video timing block which is matched to.

Lastly, the source device 100 may transmit the video data based on the selected video timing block to the sink device 200 (steps, S1310 and S1410).

FIG. 15 is a diagram illustrating the video timing blocks according to a third embodiment. More particularly, FIG. 15A shows the format of video timing block of a second type and FIG. 15B shows the format of video timing block of a third type. FIG. 15C shows the format of video timing block of a fifth type and FIG. 15D shows the format of video timing block of a sixth type.

Referring to FIG. 15, the Revision information may be allocated to bits 0 to 2 of 01 h offset, and the priority information may be allocated to bits 3 to 7. Particularly, in the embodiment, the values allocated to bits 3 to 7 of each video timing block 01 h offset may be different according to the priority of the video timing block. For example, as shown in the drawing, the values allocated to bits 3 to 7 may be smaller as the priority is higher in the video timing blocks. Otherwise, as the priority is higher in the video timing blocks, the values of 01 h offset may be smaller.

Accordingly, in the case that the priority is higher in the order of the second type → the third type → the fifth type → the sixth type, as shown in the drawing, the values 1('00001')>2('00010')>3('00011')>4('00100') may be sequentially allocated to bits 3 to 7 of the video timing blocks, respectively.

However, the allocation is not limited to the embodiment described above, and the values of o1h offset may be greater as the priority is higher in the video timing blocks.

Since the source device 100 has the characteristics of preferentially reading the video timing block of the first type, different values except value 1 may be allocated to bits 3 to 7 of the video timing block. In addition, since the video timing block of the fourth type is DMT ID code, and has the characteristics of not being allocated as Preferred Timing, different values except value 1 may be allocated to bits 3 to 7 of the video timing block.

Although the present invention has been described by separate drawings for the convenience of description, it is also possible to design so as to implement a new embodiment by merging the embodiments described for each drawing. In addition, the construction and method of the embodiments described above are not limitedly applied to the display device, but a part or the whole of the embodiments may be selectively combined and constructed so as to implement various modifications.

While the preferred embodiments have been particularly shown and described, the present specification shall not be limited to the particular embodiments described above, and it will be understood by an ordinary skilled person in the art that various changes in form and details may be made therein without departing from the spirit and scope of the present invention as defined by the following claims, and the alternative embodiments should not be individually understood from the inventive concept and prospect of the present invention.

### [Mode for Invention]

Various embodiments have been described in the Best Mode for Invention.

### [Industrial Applicability]

The present invention is used in a series of display interface fields (e.g., DisplayPort, HDMI, etc.).

It is apparent to an ordinary skilled person in the art that various modifications and changes may be made without departing from the spirit and scope of the present invention. Accordingly, the present invention is intended to include the modifications and changes of the present invention within the attached claims and the equivalent scope.

## Claims

1. A method for transmitting and receiving data performed by a source device, comprising:
transmitting a readout request for Extended Display Identification Data (EDID) information to a sink device;
receiving the EDID information from the sink device; and
determining a video timing block based on the EDID information,
wherein the EDID information includes:
a Base EDID block including basic resolution information; and
a Display Identification Data (DisplayID) structure including at least one of the video timing block including high resolution information and priority information of at least one of the video timing block.

2. The method of claim 1, wherein the priority information represents:
at least one of the video timing block which is supportable by the sink device, or
a priority of a plurality of video timing block.

3. The method of claim 2, when the priority information represents a video timing block which is supportable by the sink device,
wherein determining the video timing block includes selecting the video timing block which is supportable by the sink device.

4. The method of claim 2, when the priority information represents a plurality of video timing blocks which is supportable by the sink device,
wherein determining the video timing block includes selecting the video timing block based on a type value of the plurality of video timing blocks.

5. The method of claim 2, when the priority information represents a priority of the plurality of video timing blocks, further comprising:
sequentially matching recommended resolution information of the video data to the priority of the plurality of video timing blocks according to the priority information.

6. The method of claim 5, wherein determining the video timing block includes selecting a video timing block which is matched to the recommended resolution information of the video data among the priority of the plurality of video timing blocks as a result of matching.

7. The method of claim 1, further comprising transmitting the video data based on the determined video timing block to the sink device.

8. A source device, comprising:
a transmitter configured to transmitting and receiving data; and
a control unit configured to control the transmitter,
wherein the source device is configured to:
transmit a readout request for Extended Display Identification Data (EDID) information to a sink device;
receive the EDID information from the sink device; and
determine a video timing block based on the EDID information,
wherein the EDID information includes:
a Base EDID block including basic resolution information; and
a Display Identification Data (DisplayID) structure including at least one of the video timing block including high resolution information and priority information of at least one of the video timing block.

9. The source device of claim 8, wherein the priority information represents:
at least one of the video timing block which is supportable by the sink device, or
a priority of a plurality of video timing block.

10. The source device of claim 9, when the priority information represents a video timing block which is supportable by the sink device,
wherein the source device selects the video timing block which is supportable by the sink device.

11. The source device of claim 9, when the priority information represents a plurality of video timing blocks which is supportable by the sink device,
wherein the source device selects the video timing block based on a type value of the plurality of video timing blocks.

12. The source device of claim 9, when the priority information represents a priority of the plurality of video timing blocks,
wherein the source device sequentially matches recommended resolution information of the video data to the priority of the plurality of video timing blocks according to the priority information.

13. The source device of claim 12, wherein the source device selects a video timing block which is matched to the recommended resolution information of the video data among the priority of the plurality of video timing blocks as a result of matching.

14. The source device of claim 8, wherein the source device transmits the video data based on the determined video timing block to the sink device.

15. A method for transmitting and receiving data performed by a sink device, comprising:
receiving a readout request for Extended Display Identification Data (EDID) information from a source device; and
transmitting the EDID information from the source device;
wherein the EDID information includes:
a Base EDID block including basic resolution information; and
a Display Identification Data (DisplayID) structure including at least one of the video timing block including high resolution information and priority information of at least one of the video timing block.

16. The method of claim 15, wherein the priority information represents:
at least one of the video timing block which is supportable by the sink device, or
a priority of a plurality of video timing block.

17. The method of claim 15, further comprising receiving video data based on a video timing block which is determined based on the EDID information from the source device.

18. A sink device, comprising:
a transmitter configured to transmitting and receiving data; and
a control unit configured to control the transmitter,
wherein the source device is configured to:
receive a readout request for Extended Display Identification Data (EDID) information from a source device; and
transmits the EDID information from the source device;
wherein the EDID information includes:
a Base EDID block including basic resolution information; and
a Display Identification Data (DisplayID) structure including at least one of the video timing block including high resolution information and priority information of at least one of the video timing block.

19. The sink device of claim 18, wherein the priority information represents:
at least one of the video timing block which is supportable by the sink device, or
a priority of a plurality of video timing block.

20. The sink device of claim 17, wherein the sink device receives video data based on a video timing block which is determined based on the EDID information from the source device.
